Europäisches Patentamt

European Patent Office

Office européen des brevets

(11) Publication number: **0 320 202**
A2

# (12) EUROPEAN PATENT APPLICATION

(21) Application number: 88311531.3

(51) Int. Cl.⁴: **B60D 1/06**

(22) Date of filing: 06.12.88

(30) Priority: 10.12.87 GB 8728847

(43) Date of publication of application:
14.06.89 Bulletin 89/24

(84) Designated Contracting States:
DE FR GB IT NL SE

(71) Applicant: Ennis, Cristopher Paul
"Summerdale" Carmarthen Road
Cross Hands Nr. Llanelli Dyfed Wales SA14
6SP(GB)

(72) Inventor: Ennis, Cristopher Paul
"Summerdale" Carmarthen Road
Cross Hands Nr. Llanelli Dyfed Wales SA14
6SP(GB)

(74) Representative: Jackson, Peter Arthur et al
GILL JENNINGS & EVERY 53-64 Chancery
Lane
London WC2A 1HN(GB)

(54) Ball joint socket coupling.

(57) A ball and socket coupling for a trailer comprises
a body (12) which is fixed to the trailer drawbar and
contains a pair of part spherical friction pads (23,25)
for gripping the ball to inhibit unwanted movements,
such as snaking. The friction pad (25) at least is
mounted on a piston (14) which is initially advanced
by a lever (52) so that the ball is captive, and which
may then be advanced by fluid pressure, supplied
through a line (19) to a cylinder space (20), so that
the piston (14) is advanced and the ball is gripped
by the friction pads. The fluid pressure may be
dependent upon braking or trailer speed.

Fig 6

## BALL JOINT SOCKET COUPLING

The invention relates to ball joints of the kind which are commonly used between a draft vehicle, such as a motor car, and a trailer, such as a boat trailer or caravan. One of the vehicle or trailer, usually the vehicle, carries a ball on a rigid upstanding stem, and the other has a socket which fits over the ball. Means are provided in the socket for retaining the ball in the socket but previously the retention has been loose so that the ball is not tightly held in the socket. As a result, the ball can move freely within the socket and this can lead to the build-up of excessive movements of the trailer relatively the draft vehicle in the sense of pitching of the trailer, sometimes referred to as hogging and sagging, yaw of the trailer, referred to as snaking, and rolling of the trailer. The object of the invention is to provide a joint which will reduce such trailer movements.

In accordance with the present invention, a socket coupling for connection to a ball coupling of a ball and socket joint, of the kind for joining a draft vehicle to a trailer, comprises a socket, which is arranged, in use, to receive a ball of the ball coupling; means for locating the ball captive in the socket; a multipart part spherical seat of frictional material, for the ball, within the socket, at least one of the seat parts being mounted on a piston; and means for moving and holding the parts of the seat together so that the ball is gripped between the seat parts, the seat part-moving means comprising fluid pressure means arranged to act on the piston.

With this arrangement a frictional braking force can be applied to the ball to reduce rotational movement of the ball relatively to the socket, and hence excessive movements between the trailer and draft vehicle.

The pressure applied to the piston may be pneumatic or hydraulic and may be provided from a steady source, such as via a compressor on the vehicle, and may need to be controlled by a relief valve. However, there would be advantages if the pressure were controlled by a servo system dependent upon, for example, vehicle speed, so that the pressure, and hence the grip on the ball, is increased with vehicle speed. This could be achieved by means of a pump driven by either the draft vehicle or trailer. This would not inhibit manoeuverability at low speed but would avoid excessive relative movement between the vehicle and trailer at higher speeds. Alternatively, the servo system may be dependent on a conventional trailer braking system, thereby causing the grip on the ball to be increased during braking to give an anti-jack-knife effect. The fluid pressure applied to the piston could then be obtained from a master cylinder operated by an overrun trailer braking system or directly from a hydraulic braking circuit.

A second one of the seat parts may be stationary so that the piston-mounted seat part moves towards the stationary seat part to grip the ball between the two seat parts, and possibly also to capture the ball within the socket.

Alternatively, there may be two opposed seat parts, each mounted on a respective piston. Both seat parts will then grip the ball continually, and irrespective of any relative movements between the draft vehicle and trailer, for example upon acceleration or deceleration, which might cause the ball to move out of frictional engagement with a fixed seat part.

For simplicity of mounting within the trailer drawbar, the seat parts, of which there will normally be two, will oppose one another in the fore and aft direction. However, it is not precluded that they could oppose one another perpendicular to the towing direction and this would minimise variations in frictional engagement resulting from acceleration or deceleration.

In one construction, the piston is slidable within a cylinder formed by a sleeve, the piston being movable with the cylinder to affect restriction of the opening to the socket to capture the ball within the socket and slidable relatively to the cylinder to grip the ball between the two seats.

In another construction the piston is connected directly to a mechanism, such as a lever mechanism, to move the piston to effect the restriction of the opening of the socket to capture the ball within the socket. In this case, there will usually need to be some lost motion connection between the mechanism and the piston to allow the piston to remain free to move under the action of the fluid pressure.

The seat parts may be freely rotatable about a longitudinal towing axis to avoid the need for the ball to move within the seat upon rolling of the trailer.

Four examples of a ball and socket joint suitable for use with a caravan trailer and incorporating a socket coupling in accordance with the invention are illustrated in the accompanying drawings in which:-

Figure 1 is a diagrammatic side elevation of a vehicle and trailer connected by a first one of the examples of the joint;

Figure 2 is a central vertical section through the joint of Figure 1 in the disengaged position;

Figure 3 is a section similar to Figure 2 but to a larger scale and showing the engaged position of the joint;

Figure 4 is a section taken on the line IV-IV in Figure 3;

Figure 5 is a perspective view of a trailer carrying the socket coupling of the second one of the examples of the joint;

Figure 6 is a central vertical section through the second example of the joint;

Figure 7 is a section taken on the line VII-VII in Figure 6;

Figure 8 is a part-sectional plan view of a piston shown in Figure 6.

Figure 9 is a central vertical section through a third example of joint;

Figure 10 is an end elevation of the third example;

Figures 11 and 12 correspond to Figures 9 and 10, respectively, but show the fourth example; and,

Figure 13 is an hydraulic circuit diagram for the third example.

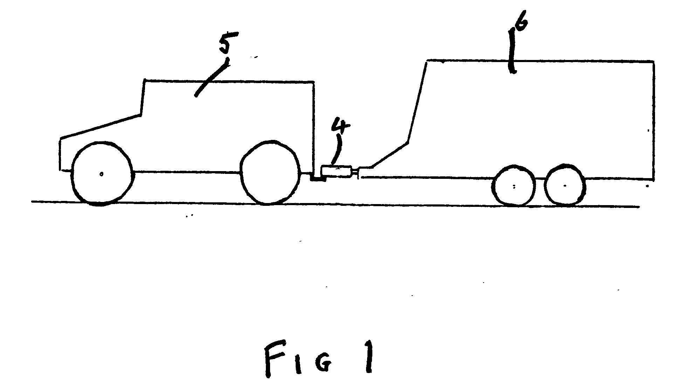

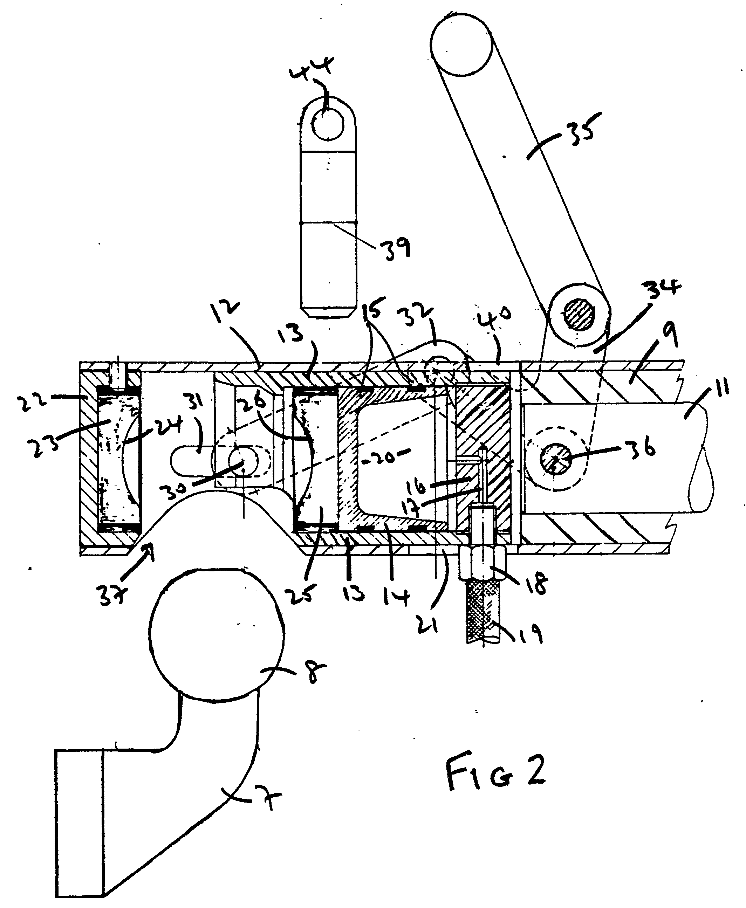

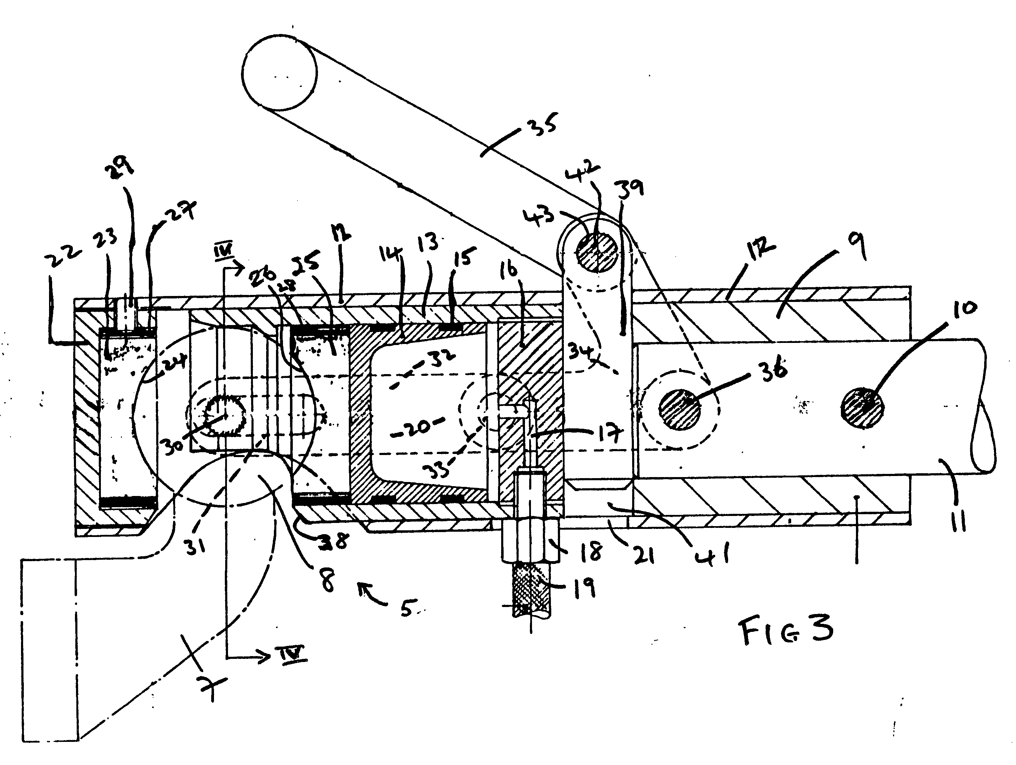

Figure 1 shows the joint 4 interconnecting a draft vehicle 5 and a trailer 6. As shown in Figures 2 and 3 the vehicle 6 has a rigid rearward towing extension 7 terminating in an upwardly projecting stem carrying a ball 8.

The first socket coupling comprises a tubular adaptor 9 which closely surrounds, and is rigidly connected by transverse pins 10 and 36 to, the conventional drawbar 11 of the trailer. Fixed around and projecting forwardly from the adaptor 9 is a tubular body 12. Slidably mounted within the body 12 is an outer cylinder part 13 containing a relatively sliding piston 14, which is sealed to the cylinder 13 by annular seals 15. The rear end of the cylinder 13 is closed by a screwed in cylinder head 16 having a duct 17 leading from a coupling 18 for an hydraulic hose 19, to a cylinder space 20 behind the piston 14. The coupling 18 is carried by the cylinder 13 and works in a slot 21 within the body 12. The other end of the body 12 is closed by a screwed in carrier 22 for a fixed friction pad 23 providing a part spherical seat 24 for the ball 8. A complementary friction pad 25, also provided with a part spherical seat 26 for the ball 8, is carried on the front of the piston 14.

The friction pads 23 and 25 are encircled by hoop rings 27 and 28 respectively. The hoop ring 27 is prevented from rotating by means of a grub screw 29, but this may be omitted if rotation of the friction pads about the axis of tow is desired.

The cylinder 13 carries outwardly projecting stub axles 30 which are constrained by elongate slots 31 in the body 12 and are pivotally connected on the respective sides of the body 12 to levers 32.

The levers 32 are themselves pivotally connected at their other ends by pins 33 to the ends of L-shaped levers 34 which are rigid with respective arms of a yoke 35. Mid points of the levers 34 are pivoted by respective ones of the pins 36 to the sides of the body 12.

In order to engage the socket coupling with the ball coupling, the yoke 35 is raised as shown in Figure 2, thus withdrawing the levers 32 and cylinder 13. The ball 8 can then be engaged within the socket coupling through an opening 37 in the bottom of the body 12, into alignment with the seats 24 and 26. The ball 8 is then captured in the socket coupling by lowering the yoke 35 to the position shown in Figure 3. This advances the cylinder 13 to the left, as seen in Figure 2 and 3, so that a lower edge 38 of the cylinder 13 underlies the ball 8 and prevents its removal. The cylinder 13 is lockable in this position by insertion downwards of a locking pin 39 through an opening 40 in the top of the body 12 and into an aperture 41 behind the cylinder 13 and cylinder head 16. While this pin is in place the cylinder cannot be withdrawn again so that the ball is held captive in the socket coupling. The pin 39 may be secured in this position by means of a cylinder lock 42 extending through aligned apertures 43 where the arms of the yoke 35 join the levers 34, and 44 in the top of the pin 39.

The ball 8 may then be gripped frictionally between the seats 24 and 26 by the application to the chamber 20, and hence to the piston 14, of hydraulic pressure through the hose 19.

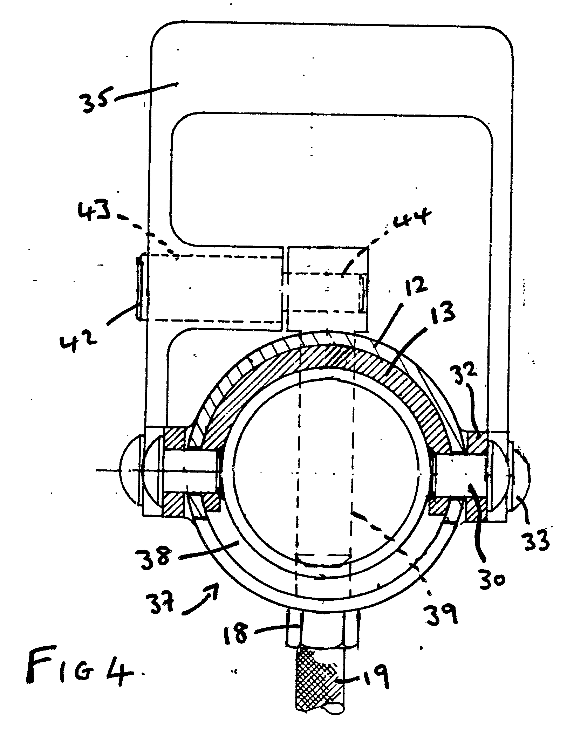

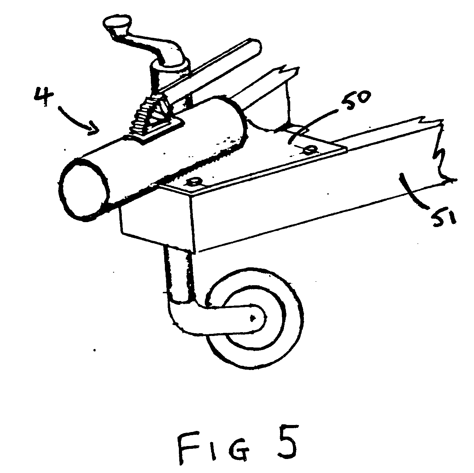

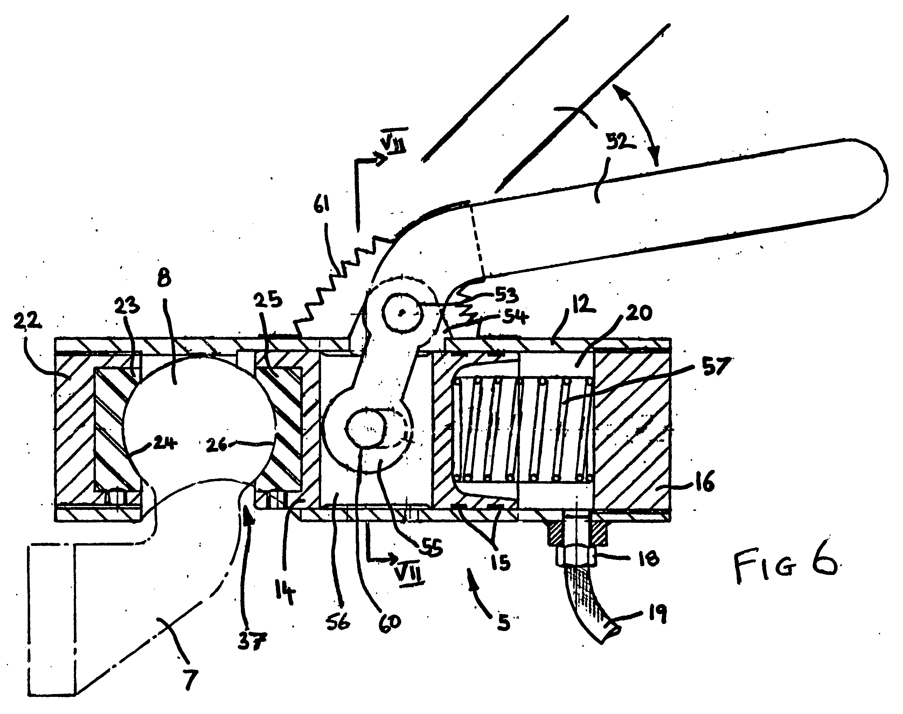

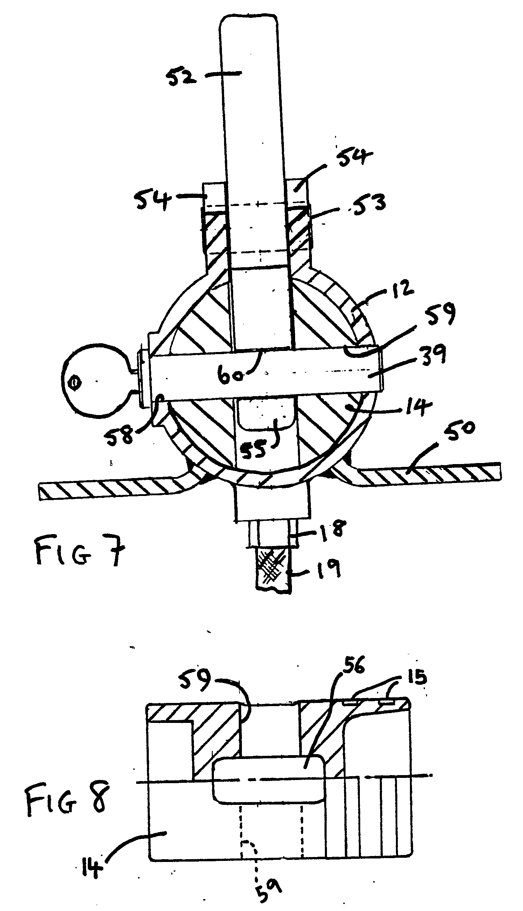

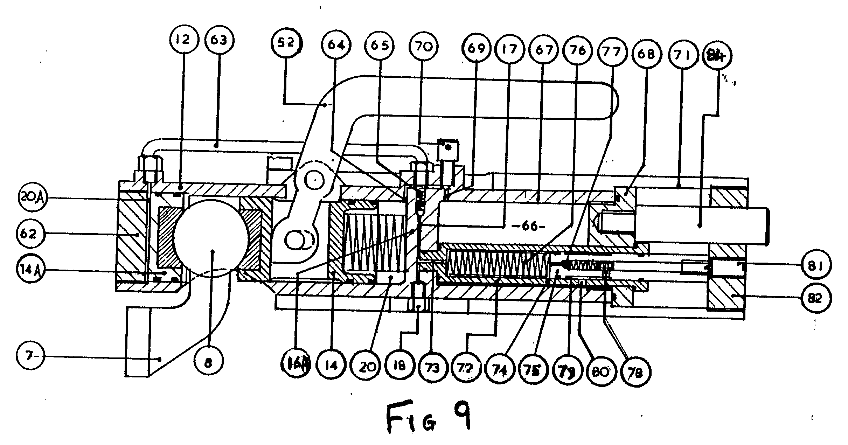

The second example of joint shown in Figures 5 to 8 is similar to that of Figures 1 to 4, and equivalent parts have the same reference numerals. The differences are that there is no outer cylinder part and hence the piston 14 slides directly inside the body 12. The hydraulic coupling 18 is mounted on the body 12 and the cylinder head 16 is screwed into the end of the body 12.

The body 12 is welded (see Figure 7) to plates 50 to permit mounting on the chassis 51 of a towed vehicle (see Figure 5).

An L-shaped lever 52 is pivotally mounted on the body 12 by means of a pin 53 supported in lugs 54. The bottom end 55 of the lever 52 is loosely located in a slot 56 formed in the piston 14, so that pivoting of the lever 52 can move the piston from a retracted position (not shown) to a forward position (Figure 6) at which the leading lower edge of the piston 14 captures the ball 8 in the opening 37. This movement is assisted by a spring 57 located in the cylinder space 20. Hydraulic fluid may then be pumped into the cylinder space 20 via the hose 19 to cause the ball 8 to be gripped more tightly between the seats 24,26. The piston 14 is able to move relatively to the bottom end 55 of the lever 52 because of the slot 56 being elongate in the direction of sliding of the piston. The piston may be prevented from moving back from the forward position to the retracted position by means of the locking pin 39, which passes through circular holes 58 in the body 12, slots 59 in the piston 14 and a circular hole 60 in the bottom end 55 of the lever 52. The slots 59 are elongate in the direction of sliding of the piston 14 so as not to inhibit the grip-adjusting movements of the piston about its forward position. A boot 61 is provided to prevent dirt entering between the lever 52 and the body 12.

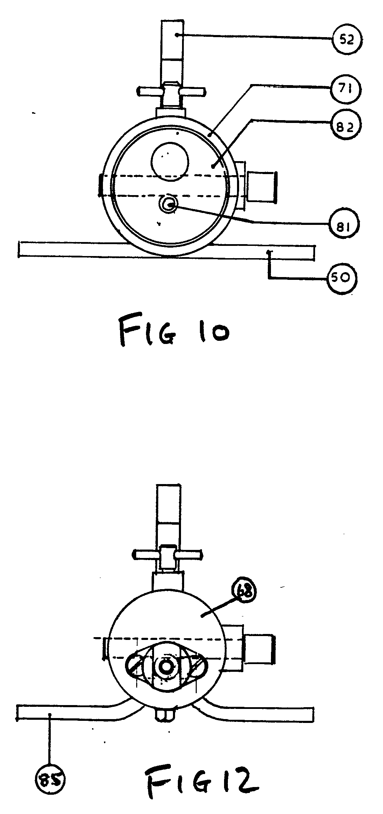

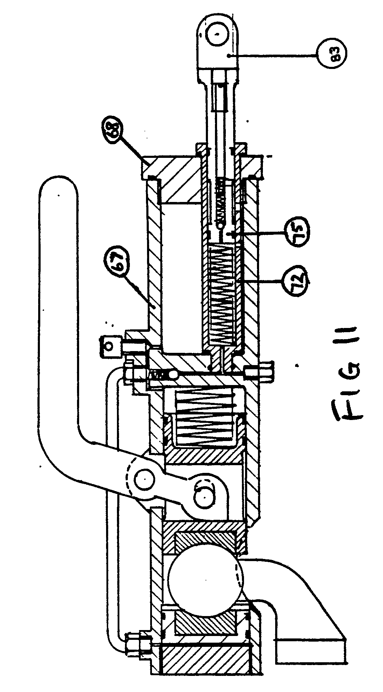

The third example illustrated in Figures 9 to 11 has many parts in common with the second example and common parts are given the same reference numerals. One difference is that the friction pad carrier 22 is replaced by a second piston 14A and a second cylinder space 22A is provided between the piston 14A and a screwed in cylinder head 62. The cylinder spaces 20 and 20A are interconnected by a pipe 63 and duct 64 which lead from the downstream side of a non return valve 65 in a duct similar to the duct 17 of the first example. In this case the cylinder head for the cylinder space 20 is provided by an integral cross wall 16A of the body 12, which has a cylindrical extension 67, closed by a screwed in end plate 68, and defining a reservoir 69. Pressure in the cylinder spaces 20 and 20A may be relieved to the reservoir 66 through a return duct 69, controlled by a check valve 70. The rear part of the body 12 and its extension 67 are surrounded by a tubular sleeve 71 which is rigid with the mounting plate 50, and in which they are free to slide axially.

The coupling 18 may be connected to an hydraulic brake system, to provide the fluid pressure for operating the pistons 14 and 14A to grip the ball 8. Alternatively, the coupling 18 may be sealed and the pressure supplied by means of a master cylinder 72, which has an outlet duct 73 at one end connected with the duct 17, and which is mounted by the cross wall 16A, and the end plate 68. A further outer end plate 82 screws into the sleeve 71. The cylinder extends through the reservoir 66 and has an inlet port 74 via which oil can flow into the cylinder when a piston 75 is fully retracted under the action of a return spring 76, so that the inlet port 74 is uncovered. Excess pressure in the cylinder can be relieved by a non-return valve 77 in a return duct 78 in the piston, the duct 78 leading via an annular groove 79 in the piston to an outlet port 80 in the cylinder wall to the reservoir.

A stem 84 is screwed at one end into the end plate 68 and extends freely through an aperture 81 in the outer end wall 82. The outer end of the piston is fixed by an adjustable screw connection 81 to the end plate 82. The arrangement is such that, upon braking by the towing vehicle, inertia causes the sleeve 71 and end plate 82 move to the left (in Figure 9) (with the trailer chassis) relatively to the parts 67, 68, 72 and 84. This causes the stem 84 to project further from the end plate 82, thereby engaging and operating the trailer overrun braking system of the trailer. At the same time the end plate 82 forces the piston 75 into the cylinder 72, causing compressed oil to be forced through the ducts 73, 17, 64 and pipe 63 to the cylinder space 20 and 20A to advance the pistons 14 and 14A and cause the ball to be gripped.

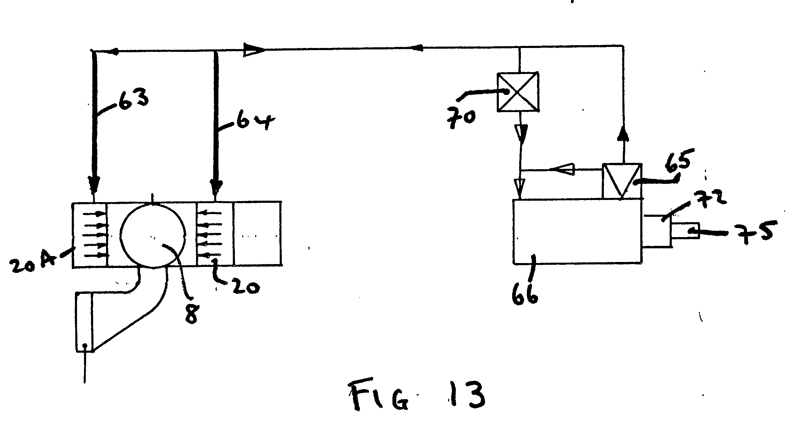

The fourth example, illustrated in Figures 11 and 12, has many parts in common with the third example and only the differences will be mentioned. In this case the parts 12, 71 and 82 are dispensed with and the body 12 and cylindrical extension 67 are rigidly mounted on the trailer chassis by means of base plates 85. The gripping pressure on the ball 8 is provided, as in the third example, by inward movement of the piston 75, relatively to the cylinder 72, but this is controlled by a servo diaphragm assembly, which is operated from the towing vehicle inlet manifold, and which is connected to the piston 75 by means of a clevis 83, fixed to the end of the piston rod. The system is then operated by the towing vehicle braking system. To connect or disconnect the towing vehicle from the trailer would need a quick release on/off valve in the servo system, situated on the towing vehicle.

The hydraulic circuit of the third and fourth examples is shown in more conventional diagrammatic form in Figure 11. Obviously this could be modified to accommodate the first and second examples, in which only one of the friction pads is mounted on the piston, by omission of the pipe 63.

**Claims**

1. A socket coupling for connection to a ball coupling of a ball and socket joint, of the kind for joining a draft vehicle to a trailer, comprising a socket, which is arranged, in use, to receive a ball (8) of the ball coupling; means (38) for locating the ball captive in the socket; a multipart part spherical seat (24,26) of frictional material, for the ball, within the socket, at least one of the seat parts being mounted on a piston (14); and means for moving and holding the parts of the seat together so that the ball is gripped between the seat parts, the seat part-moving means comprising fluid pressure means arranged to act on the piston.

2. A socket coupling according to claim 1, wherein a second one (24) of the seat parts is stationary.

3. A socket coupling according to claim 1, wherein there are two opposed seat parts (24,26), each mounted on a respective piston (14,14A).

4. A socket coupling according to claim 1 or claim 2, wherein the piston (14) is slidable within a cylinder (13) formed by a sleeve, the piston being movable with the cylinder to effect the restriction of the opening to the socket to capture the ball within the socket and slidable relatively to the cylinder to grip the ball between the two seat parts.

5. A socket coupling according any one of claims 1 to 3, wherein the piston (14) is connected directly to a mechanism (52-56) arranged to move the piston to effect the restriction of the opening of the socket to capture the ball within the socket.

6. A trailer having a socket coupling according to any of the preceding claims, wherein the fluid pressure means acting on the piston of the socket coupling is connected to a variable pressure source controlled by a servo system dependent on trailer speed, so that the fluid pressure, and hence the grip on the ball, increases as the speed increases.

7. A trailer having a socket coupling according to any of claims 1 to 5, wherein the fluid pressure means acting on the piston of the socket coupling is connected to a braking system of the trailer, whereby the grip on the ball increases during braking.

8. A socket coupling or trailer according to any one of the preceding claims, wherein the fluid pressure means is hydraulic means.

# FIG 1

FIG 2

FIG 3

EP 0 320 202 A2

FIG 4.

FIG 5

Fig 6

FIG 7

FIG 8

FIG 9

EP 0 320 202 A2

FIG 10

FIG 12

FIG 11

EP 0 320 202 A2

Fig. 13